# EUROPÄISCHE PATENTSCHRIFT

(11) **EP 0 573 949 B1**
(45) Veröffentlichungstag und Bekanntmachung des Hinweises auf die Patenterteilung: **09.10.1996**
(21) Anmeldenummer: 93109161.5
(22) Anmeldetag: 08.06.1993
(51) Int. Cl.: A01G 1/00

(54) **Mehrschichtiges Vegetationselement**
Multi-layer vegetation element
Elément de végétation multi-couchs

(30) Priorität: 12.06.1992 DE 4219275
(43) Veröffentlichungstag der Anmeldung: 15.12.1993
(73) Patentinhaber: Behrens, Wolfgang, D-27243 Gross Ippener (DE)
(72) Erfinder: Behrens, Wolfgang, D-27243 Gross Ippener (DE)
(74) Vertreter: Patentanwälte Thömen & Körner

(56) Entgegenhaltungen:
- EP-A- 0 047 365
- EP-A- 0 231 416
- EP-A- 0 248 777
- DE-A- 2 438 300
- DE-A- 3 507 429
- DE-A- 3 805 069
- DE-C- 2 438 300

## Beschreibung

Die Erfindung betrifft ein mehrschichtiges Vegetationselement nach dem Oberbegriff des Patentanspruchs 1.

Aus der DE-A-3 805 069 ist mehrschichtiges Vegetationselement aus einer oberen Kulturschicht, einer darunterliegenden Entwässerungsmatte, einem weiter unten liegenden Trennvlies und einer schließlich darunterliegenden Drainageschicht bekannt. Die Kulturschicht nimmt das Wurzelwerk der Vegetation auf und kann aus hygroskopischer Steinwolle, gärtnerischen Erden oder Kultursubstrat bestehen.

Aus der DE-A-2 438 300 ist außerdem ein Fertigelementsatz für Dachgartenkulturen bekannt der ebenfalls eine hygroskopische Kulturschicht umfaßt. Unter dieser Kulturschicht befindet sich eine Trennschicht und darunter eine Filterschicht.

Weiterhin ist aus der EP-A-47 365 eine wurzelverankernde Bodeneinlage bekannt, die einen Schichtenaufbau Krallschicht, Haltematte, Krallschicht aufweist.

Schließlich zeigt die DE-A-3 507 429 eine Aufbaumatte aus aufeinanderfolgenden Schichten verrottbarer, biologischer Materialien, wie Stroh, Schilf, Papier, Kokos oder Baumwolle.

Vegetationselemente dieser Art dienen dazu, Dach- oder Wandbegrünungen von Gebäuden zu ermöglichen, um einen Ausgleich dafür zu schaffen, daß die natürliche Vegetation durch die zunehmend dichter werdende Besiedlung zerstört wird.

Neben der vorteilhaften Auswirkung derartiger Vegetationselemente auf die Umgebung, wie die Reduzierung des Kohlendioxidgehalts der Luft und die Sauerstoffproduktion sowie die Schaffung eines ausgeglichenen Klimas wird auch im Sommer eine zu starke Aufheizung der Gebäude und im Winter eine übermäßige Abkühlung verhindert, wodurch das Raumklima in Gebäuden mit begrünten Dächern und Fassaden verbessert wird.

Es hat sich gezeigt, daß besonders nach langen Trockenperioden das in den Vegetationselementen gespeicherte Regenwasser verdunstet, so daß die organischen Bestandteile brandgefährdet sind.

Im Falle eines Blitzeinschlags oder bei auf die begrünten Flächen geworfenen Glasresten oder auch brennenden Zigaretten kann es dann zu einer Entzündung der brennbaren Bestandteile kommen, die nicht nur das Vegetationselement selbst zerstört, sondern sich auch auf das angrenzende Dach ausbreitet. Selbst wenn das Material der Kulturschicht aus einem an sich nicht brennbaren Material besteht, kann sich ein Schwelbrand über das Wurzelwerk und in der Kulturschicht befindliche Humusbestandteile in die Tiefe ausbreiten und die angrenzenden Dachbaustoffe schädigen.

Der Erfindung liegt die Aufgabe zugrunde, ein mehrschichtiges Vegetationselement dahingehend zu verbessern, daß im Falle eines Brandes organischer Bestandteile des Vegetationselementes eine Ausbreitung in die Tiefe des Vegetationselementes und damit auf angrenzende und darunterliegende Gebäudeteile sicher verhindert wird.

Diese Aufgabe wird bei einem Vegetationselement nach dem Oberbegriff des Anspruchs 1 durch die im Kennzeichen genannten Merkmale gelöst.

Durch die feuerhemmende Schicht wird erreicht, daß bei einem Brand der Pflanzen und der Kulturschicht sowie eventuell weiterer organischer Bestandteile des Vegetationselements eine Ausbreitung in Richtung des Gebäudes unterbunden wird. Dies wird einerseits dadurch erzielt, daß die feuerhemmende Schicht selbst keine brennbaren Stoffe enthält und damit dem Feuer keine Nahrung geboten wird und daß zum anderen auch eine Wärmeisolierung gegenüber den Gebäudeteilen erreicht wird, die eine Entzündung brennbarer Teile des Gebäudes durch Wärmeleitung oder Wärmestrahlung verhindert.

Die Feuerhemmschicht besteht vorzugsweise aus Steinwolle und weist eine Dicke zwischen 1 cm bis 10 cm aus.

Dieses Material ist nicht brennbar, besitzt eine gute Wärmedämmung und ist darüberhinaus auch witterungsbeständig und gegen chemische und biologische Einflüsse resistent. Die Dicke wird so gewählt, daß sie in einem entsprechenden Verhältnis zum Bewuchs steht. Bei einem geringen Bewuchs, der im Brandfalle auch nur eine relativ geringe Wärme entwickeln könnte, reicht eine verhältnismäßig dünne Schicht als Feuerhemmschicht aus, während bei einem starken Bewuchs eine dickere Schicht als Feuerhemmschicht gewählt wird, um der größeren Wärmeentwicklung besser standhalten zu können.

Die Kulturschicht kann ebenfalls aus Steinwolle bestehen. In diesem Falle dient der obere Teil dieser einteiligen Schicht als Kulturschicht und nimmt die Wurzeln auf, während der untere Teil frei von Wurzeln ist und überwiegend oder ausschließlich die Aufgaben der Isolierung im Brandfalle übernimmt.

Oberhalb der Kulturschicht kann eine Krallschicht angeordnet sein, die vor Erosion und Tierfraß schützt. Eine Krallschicht ist besonders dann von Vorteil, wenn das Vegetationselement geneigt angeordnet ist, z.B. an Wänden oder schrägen Dächern. Sie verhindert, daß Pflanzensamen oder junge Pflanzen, die mit ihren Wurzeln noch nicht sehr tief in die Kulturschicht eingedrungen sind, von Wind und Wasser entfernt werden können.

Die Krallschicht kann aus einem gegen Ultraviolettlicht resistenten Gewebe aus Kunststoff oder auch aus Kokosfasergewebe bestehen.
Für die Kulturschicht kommen als Stoffe ebenfalls Steinwolle aber auch Substratersatzstoffe, wie Kokos, Baumwolle, Sisal oder Stroh in Betracht. Ferner kann die Kulturschicht ein Nährmedium umfassen, so daß die Pflanzen ständig mit Nährstoffen versorgt werden können.

Als Material für die Trennschicht kommen Vliesmaterial aus Kunststoff, sowie Jute oder Filz in Betracht. Ebenfalls ist es möglich, die Trennschicht aus einer perforierten Folie herzustellen.

Die Trennschicht sorgt dafür, daß das für den Pflanzenwuchs erforderliche Niederschlagswasser in der Kulturschicht gespeichert und an die Pflanzen abgegeben werden kann, aber nur in geringem Maße nach unten entweichen kann. Allerdings ist die Trennschicht nicht vollständig wasserdicht, sondern sie ermöglicht bei starken Niederschlägen, daß überschüssiges Wasser aufgrund des hydrostatischen Druckes nach unten abgeführt und von dort über eine Dachentwässerung entfernt werden kann.

Bei Flachdächern kann es zweckmäßig sein, unterhalb der Trennschicht eine Dränageschicht anzuordnen, die aus einem Schlingengewebe aus Kunststoff, aus einem Kokosfasergewirr oder auch Schüttgutbaustoffen besteht. Dabei ergibt sich ein größere Querschnitt, so daß auch bei geringer Dachneigung überschüssiges Niederschlagswasser zur Dachentwässerung gelangen und von dort abgeleitet werden kann.

Weiterhin ist vorgesehen, daß die einzelnen Schichten miteinander verklebt oder miteinander vernadelt sind.

Es ist dadurch möglich, das mehrschichtige Vegetationselement vorgefertigt auf Rollen anzuliefern und als komplette Einheit am Gebäude anzubringen oder zu verlegen.

Weiterhin ist es möglich, daß die Kulturschicht mit Saatgut versehen oder auch bereits begrünt ist. Es ist jedoch auch möglich, das Vegetationselement zunächst ohne Saatgut oder Begrünung anzubringen und erst nachträglich Saatgut auszustreuen, das bei Verwendung einer Krallschicht dann vor Erosion und Tierfraß geschützt ist und ungestört keimen und in der Kulturschicht wurzeln kann.

Weiterbildungen und vorteilhafte Ausgestaltungen der Erfindung ergeben sich aus den weiteren Ansprüchen. Zwei Ausführungsformen der Erfindung werden anhand der Zeichnung näher erläutert.
- Fig. 1: zeigt einen Querschnitt durch einen ersten Aufbau eines mehrschichtigen Vegetationselementes und
- Fig. 2: einen Querschnitt durch einen zweiten Aufbau eines Vegetationselementes.

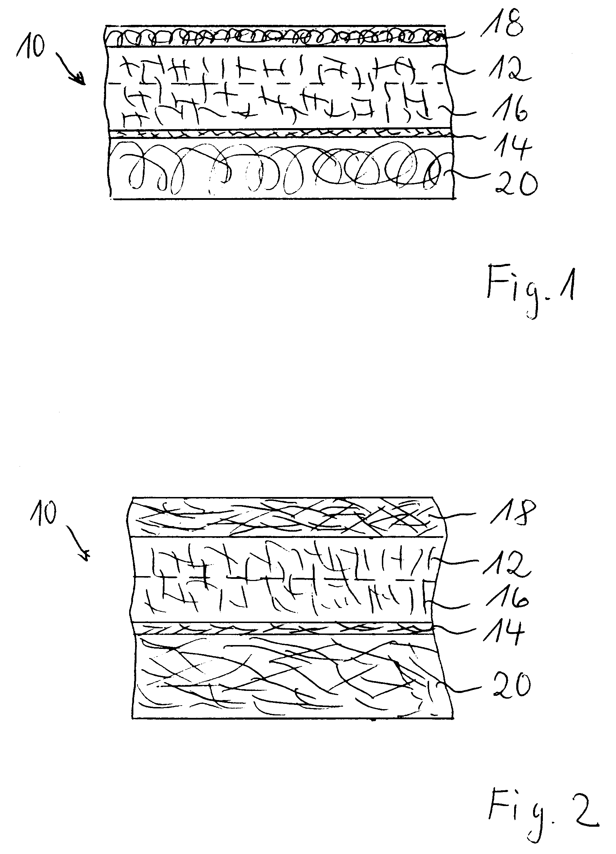

Das in Fig. 1 dargestellte mehrschichtige Vegetationselement 10 umfaßt eine obere Krallschicht 18 aus einem UV-Licht-stabilen Kunststoff-Schlinggewebe. Die Dicke dieser Krallschicht 18 beträgt 5 mm. Darunter befindet sich eine Kulturschicht 12 und eine Feuerhemmschicht 16, die beide aus Steinwolle bestehen.

Die Steinwolle besitzt hygrophile Eigenschaften und ist 20 mm dick. Dabei entfallen etwa 10 mm auf die oben liegende Kulturschicht 12 und weitere 10 mm auf die darunter liegende Feuerhemmschicht 16. Es ist allerdings so, daß nicht eine klare Trennung zwischen diesen beiden Schichten vorgenommen zu werden braucht.

An die untere Feuerhemmschicht 16 schließt sich eine Trennschicht 14 aus Vliesmaterial an, die hier das Flächengewicht 50 g pro Quadratmeter besitzt. Unterhalb der Trennschicht 14 wiederum ist eine Dränageschicht 20 angeordnet, die ähnlich der Krallschicht 18 aus einem Schlinggewebe aus Kunststoff besteht. Allerdings besitzt die Dränageschicht 20 eine Schichtdicke von 15 mm, damit ein ausreichender Querschnitt für die Abfuhr überschüssigen Niederschlagswassers gegeben ist. Je nach dem zu erwartenden Niederschlag und der Dachneigung kann die Dränageschicht 20 eine Schichtdicke zwischen 5 mm und 50 mm umfassen.

Die in Fig. 2 dargestellte alternativer Ausgestaltung des Vegetationselementes 10 ist von den Schichten her ähnlich aufgebaut. An Stelle des Kunststoff-Schlinggewebes für die Krallschicht 18 und die Dränageschicht 20 sind hier jedoch Fasergewirre aus Kokosfasern eingebaut. Die bevorzugte Schichtdicke der Krallschicht 18 beträgt hier 10 mm und die bevorzugte Dicke der Dränageschicht 20 beträgt 20 mm. Außerdem wird auch ein anderes Material für die Trennschicht 14 verwendet, hier nämlich Jute oder Filz. Statt dessen ist auch die Verwendung von Geotextil möglich.

Während also bei dem in Fig. 1 dargestellten Aufbau des Vegetationselementes 10 eine Kombination aus künstlichen Stoffen und natürlichen Stoffen gewählt wird, werden bei der Ausführung in Fig. 2 ausschließlich Naturstoffe verwendet.

Möglich ist auch ein Aufbau, bei dem unterschiedliche Kombinationen zur Anwendung gelangen. So kann es zweckmäßig sein, statt der in Fig. 2 gezeigten Dränageschicht 20 aus Kokosfasern hierfür ein Kunststoffschlinggewebe oder eine Schüttbaustoffe, wie Kies, Lava, Blähton oder Liapur zu verwenden. Gerade bei ausgedehnten Flachdächern besteht nämlich die Gefahr, daß überschüssiges Niederschlagswasser in der Dränageschicht 20 längere Zeit verbleibt, so daß die dort vorhandenen Materialien rottungsbeständig sein müssen. In diesem Fall wurde daher den vorgenannten Alternativen der Vorzug gegenüber einer Dränageschicht 20 aus Kokosfasergewirr gegeben werden.

## Patentansprüche

1. Mehrschichtiges Vegetationselement, bestehend aus einer ein Nährmedium und das Wurzelwerk der Vegetation aufnehmenden Kulturschicht (12) und einer nicht vollständig wasserdichten Trennschicht (14), dadurch gekennzeichnet, daß zwischen der Kulturschicht (12) und der Trennschicht (14) eine Feuerhemmschicht (16) aus nicht brennbarem und wärmeisolierendem Material angeordnet ist.

2. Vegetationselement nach Anspruch 1 , dadurch gekennzeichnet, daß die Feuerhemmschicht (16) aus Steinwolle besteht und eine Dicke zwischen 1 - 10 cm aufweist.

3. Vegetationselement nach Anspruch 1 oder 2, dadurch gekennzeichnet, daß die Kulturschicht (12) aus Steinwolle besteht.

4. Vegetationselement nach einem oder mehreren der Ansprüche 1 - 3, dadurch gekennzeichnet, daß auf der Kulturschicht (12) eine Krallschicht (18) angeordnet ist.

5. Vegetationselement nach Anspruch 4, dadurch gekennzeichnet, daß die Krallschicht (18) eine Stärke zwischen 5 und 10 mm aufweist.

6. Vegetationselement nach Anspruch 4 oder 5, dadurch gekennzeichnet, daß die Krallschicht (18) aus einem ultraviolettlichtstabilen Schlinggewebe aus Kunststoff besteht.

7. Vegetationselement nach Anspruch 4 oder 5, dadurch gekennzeichnet, daß die Krallschicht (18) aus einem Kokos-Faser-Gewirr besteht.

8. Vegetationselement nach einem der Ansprüche 1 - 2 oder 4 - 7, dadurch gekennzeichnet, daß die Kulturschicht (12) aus organischen strukturstabilen Substratersatzstoffen, wie Kokos, Baumwolle, Sisal oder Stroh besteht.

9. Vegetationselement nach einem oder mehreren der Ansprüche 1 - 8, dadurch gekennzeichnet, daß die Trennschicht (14) aus einem Vliesmaterial aus Kunststoff, aus Jute oder aus Filz besteht.

10. Vegetationselement nach einem oder mehreren der Ansprüche 1 - 8, dadurch gekennzeichnet, daß die Trennschicht (14) aus einer perforierten Folie besteht.

11. Vegetationselement nach Anspruch 9, dadurch gekennzeichnet, daß die Trennschicht (14) ein Flächengewicht zwischen 50 g/m² und 1000 g/m² besitzt.

12. Vegetationselement nach einem oder mehreren der Ansprüche 1 - 11, dadurch gekennzeichnet, daß unterhalb der Trennschicht (14) eine Drainageschicht (20) angeordnet ist.

13. Vegetationselement nach einem oder mehreren der Ansprüche 1 - 12, dadurch gekennzeichnet, daß die Drainageschicht (20) aus einem Schlinggewebe aus Kunststoff besteht.

14. Vegetationselement nach Anspruch 12, dadurch gekennzeichnet, daß die Drainageschicht (20) aus einem Kokos-Faser-Gewirr besteht.

15. Vegetationselement nach Anspruch 12, dadurch gekennzeichnet, daß die Drainageschicht (20) aus Schüttgutbaustoffen, wie Kies, Lava, Blähton, Liapor oder eine Kombination dieser Stoffe besteht.

16. Vegetationselement nach einem der Ansprüche 1 - 15, dadurch gekennzeichnet, daß die einzelnen Schichten (12, 14, 16, 18, 20) miteinander verklebt sind.

17. Vegetationselement nach einem oder mehreren der Ansprüche 1 - 15, dadurch gekennzeichnet, daß die einzelnen Schichten (12, 14, 16, 18, 20) miteinander vernadelt sind.

18. Vegetationselement nach einem oder mehreren der Ansprüche 1 - 17, dadurch gekennzeichnet, daß die Kulturschicht (12) mit Saatgut versehen ist.

19. Vegetationselement nach einem oder mehreren der Ansprüche 1 - 17, dadurch gekennzeichnet, daß die Kulturschicht (12) begrünt ist.

## Claims

1. Multilayer vegetation element comprising a culture layer (12) receiving a nutrient medium and the vegetation roots and a not completely watertight separating layer (14), characterized in that between the culture layer (12) and the separating layer (14) is placed a fire-retarding layer (16) of non-flammable and thermally insulating material.

2. Vegetation element according to claim 1, characterized in that the fire-retarding layer (16) is of rock wool and has a thickness between 1 and 10 cm.

3. Vegetation element according to claim 1 or 2, characterized in that the culture layer (12) is of rock wool.

4. Vegetation element according to one or more of the claims 1 to 3, characterized in that a claw layer (18) is placed on the culture layer (12).

5. Vegetation element according to claim 4, characterized in that the claw layer has a thickness between 5 and 10 mm.

6. Vegetation element according to claim 4 or 5, characterized in that the claw layer (18) is of ultraviolet light-stable, plastic loop fabric.

7. Vegetation element according to claim 4 or 5, characterized in that the claw layer (18) comprises tangled coconut fibres.

8. Vegetation element according to one of the claims 1 to 2 or 4 to 7, characterized in that the culture layer (12) is of organic, structurally stable substrate substitute materials such as coconut, cotton, sisal or straw.

9. Vegetation element according to one or more of the claims 1 to 8, characterized in that the separating layer (14) is a plastic nonwoven of jute or felt.

10. Vegetation element according to one or more of the claims 1 to 8, characterized in that the separating layer (14) comprises a perforated sheet.

11. Vegetation element according to claim 9, characterized in that the separating layer (14) has a weight per unit area between 50 and 1000 g/m².

12. Vegetation element according to one or more of the claims 1 to 11, characterized in that a drainage layer (20) is placed below the separating layer (14).

13. Vegetation element according to one or more of the claims 1 to 12, characterized in that the drainage layer (20) is of plastic loop fabric.

14. Vegetation element according to claim 12, characterized in that the drainage layer (20) comprises a knitted coconut fibre fabric.

15. Vegetation element according to claim 12, characterized in that the drainage layer (20) is of bulk construction materials such as gravel, lava, expanded clay, liapor or a combination thereof.

16. Vegetation element according to one of the claims 1 to 15, characterized in that the individual layers (12, 14, 16, 18, 20) are bonded together.

17. Vegetation element according to one or more of the claims 1 to 15, characterized in that the individual layers (12, 14, 16, 18, 20) are needled together.

18. Vegetation element according to one or more of the claims 1 to 17, characterized in that the culture layer (12) is provided with seed.

19. Vegetation element according to one or more of the claims 1 to 17, characterized in that the culture layer (12) is greened.

## Revendications

1. Elément de végétation multi-couche, constitué d'une couche de culture (12), destinée à recevoir un milieu nutritif et les racines de plantes, et une couche de séparation (14) pas complètement étanche à l'eau, caractérisé en ce que, entre la couche de culture (12) et la couche de séparation (14), se trouve une couche anti-feu (16) en matière incombustible et isolante thermiquement.

2. Elément de végétation multi-couche suivant la revendication 1, caractérisé en ce que la couche anti-feu est constituée de laine minérale et a une épaisseur comprise entre 1 et 10 cm.

3. Elément de végétation multi-couche suivant la revendication 1 ou 2, caractérisé en ce que la couche de culture (12) est constituée de laine minérale.

4. Elément de végétation multi-couche suivant une ou plusieurs des revendications 1 à 3, caractérisé en ce que, sur la couche de culture (12), se trouve une couche d'accrochage (18).

5. Elément de végétation multi-couche suivant la revendication 4, caractérisé en ce que la couche d'accrochage (18) a une épaisseur comprise entre 5 et 10 mm.

6. Elément de végétation multi-couche suivant la revendication 4 ou 5, caractérisé en ce que la couche d'accrochage (18) est constituée d'un tissu éponge en plastique résistant à la lumière ultra-violette.

7. Elément de végétation multi-couche suivant la revendication 4 ou 5, caractérisé en ce que la couche d'accrochage (18) est constituée d'un labyrinthe de fibres de coco.

8. Elément de végétation multi-couche suivant une des revendications 1 à 2 ou 4 à 7, caractérisé en ce que la couche de culture (12) est constituée de produits artificiels de structure stable comme des fibres de coco, de coton, de fibres de sisal ou de paille.

9. Elément de végétation multi-couche suivant une ou plusieurs des revendications 1 à 8, caractérisé en ce que la couche de séparation (14) est constituée d'une matière non-tissée en plastique, en jute ou en feutre.

10. Elément de végétation multi-couche suivant une ou plusieurs des revendications 1 à 8, caractérisé en ce que la couche de séparation (14) est constituée d'une feuille perforée.

11. Elément de végétation multi-couche suivant la revendication 9, caractérisé en ce que la couche de séparation (14) a un grammage compris entre 50 et 1000 g/m².

12. Elément de végétation multi-couche suivant une ou plusieurs des revendications 1 à 11, caractérisé en ce que, sous la couche de séparation (14), se trouve une couche de drainage (20).

13. Elément de végétation multi-couche suivant une ou plusieurs des revendications 1 à 12, caractérisé en ce que la couche de drainage (20) est constituée d'un tissu éponge en plastique.

14. Elément de végétation multi-couche suivant la revendication 12, caractérisé en ce que la couche de drainage (20) est constituée d'un labyrinthe de fibres de coco.

15. Elément de végétation multi-couche suivant la revendication 12, caractérisé en ce que la couche de drainage (20) est constituée de produits de construction en vrac, comme du gravier, de la lave, de l'argile expansée, du liasique poreux ou un mélange de ces produits.

16. Elément de végétation multi-couche suivant une des revendications 1 à 15, caractérisé en ce que les couches individuelles (12, 14, 16, 18, 20) sont collées l'une sur l'autre.

17. Elément de végétation multi-couche suivant une ou plusieurs des revendications 1 à 15, caractérisé en ce que les couches individuelles (12, 14, 16, 18, 20) sont épinglées l'une sur l'autre.

18. Elément de végétation multi-couche suivant une ou plusieurs des revendications 1 à 17, caractérisé en ce que la couche de séparation (14) est pourvue de semences.

19. Elément de végétation multi-couche suivant une ou plusieurs des revendications 1 à 17, caractérisé en ce que la couche de culture (12) est gazonnée.
